# EUROPÄISCHE PATENTSCHRIFT

(11) **EP 3 590 183 B1**
(45) Veröffentlichungstag und Bekanntmachung des Hinweises auf die Patenterteilung: **01.09.2021**
(21) Anmeldenummer: 18708394.4
(22) Anmeldetag: 28.02.2018
(51) Int. Cl.: H02M 3/28, H02M 3/337, H02M 1/00, H02M 1/32

(54) **SPANNUNGSWANDLER, VERFAHREN ZU DESSEN BETRIEB UND COMPUTERPROGRAMM**
VOLTAGE CONVERTER, METHOD FOR OPERATION THEREOF, AND COMPUTER PROGRAM
TRANSFORMATEUR DE TENSION, PROCÉDÉ DE FONCTIONNEMENT DE CELUI-CI ET PROGRAMME INFORMATIQUE

(30) Priorität: 28.02.2017 DE 102017104138
(43) Veröffentlichungstag der Anmeldung: 08.01.2020
(73) Patentinhaber: Christian-Albrechts-Universität zu Kiel, 24118 Kiel (DE)
(72) Erfinder: LISERRE, Marco, 24248 Mönkeberg (DE); BUTICCHI, Giampaolo, 315100 Ningbo (CN); COSTA, Levy, 5430 Wettingen (CH); ANDRESEN, Markus, 24116 Kiel (DE)
(74) Vertreter: Gramm, Lins & Partner Patent- und Rechtsanwälte PartGmbB
(86) Internationale Anmeldenummer: PCT/EP2018/054893
(87) Internationale Veröffentlichungsnummer: WO 2018/158294

(56) Entgegenhaltungen:
- EP-A1- 3 054 593
- WO-A1-2009/138101
- US-A1- 2001 012 207
- US-A1- 2011 080 151
- US-A1- 2013 083 575
- SHIVA S M ET AL: "A new phase shedding and phase adding control scheme for interleaved DAB converter operating in IPOP configuration", 2015 IEEE INTERNATIONAL TELECOMMUNICATIONS ENERGY CONFERENCE (INTELEC), IEEE, 18. Oktober 2015 (2015-10-18), Seiten 1-6, XP032968696, DOI: 10.1109/INTLEC.2015.7572420 [gefunden am 2016-09-20]

## Beschreibung

Die Erfindung betrifft einen Spannungswandler gemäß dem Oberbegriff des Anspruchs 1. Die Erfindung betrifft außerdem ein Verfahren zum Betrieb eines derartigen Spannungswandlers sowie ein Computerprogramm zur Durchführung des Verfahrens auf einem Rechner.

Spannungswandler dienen zur Wandlung einer hohen Gleichspannung in eine niedrige Gleichspannung oder umgekehrt. Die Gleichspannungen, d.h. die erste Gleichspannung und die zweite Gleichspannung, können auch gleich groß oder im Wesentlichen gleich groß sein, wenn ein Spannungswandler z.B. zur galvanischen Trennung zwischen Gleichspannungsnetzen eingesetzt werden soll.

Die vorliegende Erfindung geht dabei von einem modularen Aufbau des Spannungswandlers mit einer Vielzahl von Wandlermodulen aus, was den Vorteil hat, dass durch entsprechende Verschaltung der Wandlermodule primärseitig und sekundärseitig (Parallelschaltung/Reihenschaltung) eine jeweils geeignete Anpassung an die Erfordernisse der zu wandelnden Gleichspannungen möglich ist und der gesamte Bauteilaufwand, insbesondere für Leistungshalbleiter, vergleichsweise moderat gehalten werden kann. Allgemein liegt der Vorteil solcher modularen Systeme in geringen Kosten und einem potentiell höheren Wirkungsgrad des Systems.

Aus der EP 3 054 593 A1 sind ein integriertes magnetisches Gerät und ein Leistungswandlerkreis bekannt. Aus der US 2001/0012207 A1 ist ein Energieversorgungsgerät für ein elektrisches Schienenfahrzeug bekannt. Aus der Veröffentlichung von Shiva S. M. et al.: "A new phase shedding and phase adding control scheme for interleaved DAB converter operating in IPOP configuration", 2015 IEEE International Telecommunications Energy Conference (INTELEC), IEEE, 18. Oktober 2015 sind Verfahren zum Betrieb eines Spannungswandlers bekannt. Aus der
US 2011/0080151 A1 sind ein System und ein Verfahren für eine Mehrphasen-Spannungsregulierung bekannt.

Der Erfindung liegt die Aufgabe zugrunde, einen solchen modularen Spannungswandler hinsichtlich der Funktionalität und Skalierbarkeit fortzubilden.

Diese Aufgabe wird mit einem Spannungswandler gemäß Anspruch 1 gelöst. Dies beinhaltet, dass die Wandlermodule jeweils als Multiple Active Bridge, Full-resonant-Topologie, Stromquellen-Topologie, Impedanzquellen-Topologie oder ähnliches mit einem jeweiligen zwischen der Primärseite und der Sekundärseite eines Wandlermoduls geschalteten Transformator ausgebildet sind, wobei die Transformatoren der Wandlermodule miteinander magnetisch gekoppelt sind.

Die vorliegende Erfindung betrifft daher Spannungswandler, die auf der Funktionalität einer Multiple Active Bridge oder einer ähnlichen Wandlertechnologie beruhen, die einen Transformator erfordert. Eine Multiple Active Bridge kann z.B. in Form einer Dual Active Bridge, wie in der US 5,027,264 beschrieben, oder einer Quadruple Active Bridge realisiert sein, wobei auch andere Topologien oder Technologien benutzt werden können. Bei dieser Art von Spannungswandlern werden geschaltete Leistungshalbleiter eingesetzt. Zur Energieübertragung zwischen der Primärseite und der Sekundärseite werden über die Leistungshalbleiter auf beiden Seiten, d.h. Primärseite und Sekundärseite, durch getaktetes Schalten der Leistungshalbleiter gepulste, rechteckförmige Signale erzeugt. Die Energieübertragung erfolgt über einen Phasenversatz zwischen den Signalen der Primärseite und der Sekundärseite (Phase Shift Modulation). Auch andere Regelungen, wie z.B. Tastgrad-Regelung oder ähnlich, können vorteilhaft eingesetzt werden. Im Vergleich zu konventionellen Spannungswandlern, die mit vergleichsweise geringer Frequenz betrieben werden, kommt bei der Multiple Active Bridge eine Hochfrequenzübertragung zum Einsatz. Der hierfür benötigte Transformator benötigt im Vergleich zur Niedrigfrequenzübertragung wenig Platz, sodass solche Spannungswandler kompaktbauend und dementsprechend kostengünstig realisiert werden können.

Bei der vorliegenden Erfindung ist somit eine hocheffiziente Energieübertragung bei minimiertem Platzbedarf und Kosten möglich.

Ein zusätzlicher synergetischer Effekt mit der modularen Struktur des Spannungswandlers wird dadurch erzielt, dass die Transformatoren der Wandlermodule miteinander magnetisch gekoppelt sind. Auf diese Weise kann elektrische Leistung nicht nur zwischen der Primärseite und der Sekundärseite innerhalb eines Wandlermoduls übertragen werden, sondern es ist auch ein Leistungstransfer zwischen den auf diese Weise miteinander magnetisch gekoppelten Wandlermodulen möglich. Hierdurch kann die Skalierbarkeit, Ausfallunempfindlichkeit und Reparaturfreundlichkeit des Systems weiter verbessert werden. Allgemein gesagt wird der Spannungswandler im Hinblick auf die Fehlertoleranz, die Skalierbarkeit der übertragbaren Spannung und Leistung und der Reparaturfähigkeit deutlich verbessert. Durch die Modularität des Spannungswandlers müssen im Defektfall nur das betroffene Wandlermodul oder Teile davon ausgetauscht werden. Durch die Modularität wird zudem eine Redundanz bereitgestellt, die es ermöglicht, den Spannungswandler bei Defekt bspw. eines einzelnen Wandlermoduls weiter zu betreiben. Dementsprechend wird die Ausfallsicherheit erhöht. Eine Reparatur kann dann zu einem geeigneten Zeitpunkt erfolgen und muss nicht zwingend sofort durchgeführt werden. Zudem wird durch die Modularität die Wartung insgesamt vereinfacht.

Durch den bei einer Multiple Active Bridge typischen hochfrequenten Betrieb können die benötigten Transformatoren zudem klein gehalten werden. Sie haben dementsprechend ein geringeres Gewicht als bei konventionellen Spannungswandlern, was die Wartung und den Austausch von Bauteilen des Spannungswandlers vereinfacht und eine Reparatur vor Ort häufig erst ermöglicht.

Die Transformatoren können kernlos oder mit einem magnetischen Kern ausgebildet sein. Bei der magnetischen Kopplung wird davon ausgegangen, dass zwischen erfindungsgemäß miteinander magnetisch gekoppelten Transformatoren ein Kopplungsgrad von wenigstens k = 0,1 vorliegt. Bekanntlich kann der Kopplungsgrad k maximal den Wert 1 erreichen, was einem idealen Transformator entspricht. Der Kopplungsgrad k = 0 würde einer nicht vorhandenen magnetischen Kopplung der Transformatoren entsprechen.

Der Spannungswandler kann insbesondere als bidirektionaler Spannungswandler ausgebildet sein, der wahlweise die erste Gleichspannung als Eingangsspannung umwandelt in die zweite Gleichspannung, die dann eine Ausgangsspannung ist, oder die zweite Gleichspannung als Eingangsspannung verarbeitet, um die erste Gleichspannung als Ausgangsspannung bereitzustellen.

Wie sich aus den vorhergehenden Erläuterungen ergibt, weisen die Wandlermodule jeweils eine eigene Primärseite und Sekundärseite auf. Dabei sind die Primärseiten der Wandlermodule der Primärseite des Spannungswandlers zugeordnet, und die Sekundärseiten der Wandlermodule sind der Sekundärseite es Spannungswandlers zugeordnet.

Die Erfindung eignet sich allgemein für die Anbindung von Systemen der Mittelspannung oder der Hochspannung. Die Erfindung eignet sich auch in Gleichspannungsnetzen zur galvanischen Trennung. Weitere Anwendungsfelder sind bspw. leistungselektrisch basierte Transformatoren (Solid State Transformers), elektrische Schienenfahrzeuge, Ladestationen für Elektrofahrzeuge oder die Anbindung von Batteriesystemen.

Gemäß der Erfindung kann die magnetische Kopplung zwischen den Wandlermodulen durch einen deren Transformatoren magnetisch verbindenden magnetischen Kern gebildet werden. Durch einen solchen magnetischen Kern kann der Kopplungsgrad und damit die Effizienz der Leistungsübertragung von einem Wandlermodul zu einem anderen Wandlermodul über die magnetisch gekoppelten Transformatoren deutlich gesteigert werden.

Gemäß einer vorteilhaften Weiterbildung der Erfindung ist vorgesehen, dass der magnetische Kern als ringförmig geschlossener oder zumindest im Wesentlichen geschlossener magnetischer Kern ausgebildet ist. Hierdurch kann der Kopplungsgrad und damit die Effizienz der Energieübertragung weiter gesteigert werden.

Gemäß einer vorteilhaften Weiterbildung der Erfindung ist vorgesehen, dass mehrere oder alle der Transformatoren durch eine Vielzahl primärseitiger und sekundärseitiger Transformatorwicklungen, die auf einem gemeinsamen magnetischen Kern angeordnet sind, gebildet sind. Dies erlaubt auch einen modularen Aufbau des erfindungsgemäßen Spannungswandlers in Bezug auf die Transformatoren. Der gemeinsame magnetische Kern ermöglicht zudem Kostenvorteile gegenüber getrennten magnetischen Kernen.

Gemäß der Erfindung ist vorgesehen, dass die einzelnen Wandlermodule mit jeweils eigenen Transformatoren ausgebildet werden können, wobei die magnetisch miteinander gekoppelten Transformatoren mechanisch lösbar miteinander gekoppelt sind, sodass ein einzelner Transformator oder eine einzelne Transformatorwicklung austauschbar ist. Hierdurch wird die Reparaturfreundlichkeit des erfindungsgemäßen Spannungswandlers weiter verbessert.

Der bereits erwähnte gemeinsame magnetische Kern des Transformators kann erfindungsgemäß selbst wiederum modular aufgebaut sein, d.h. aus einzelnen Kern-Modulen. Dies ermöglicht auch einen partiellen Austausch der Teile des Transformators im Fall eines Defekts einer Wandlerzelle oder eines Wandlermoduls. Es besteht damit die Möglichkeit, die entsprechende Wandlerzelle und den zugehörigen Teil des Kerns, d.h. das entsprechende Kern-Modul, zu entfernen und/oder auszutauschen.

Gemäß einer vorteilhaften Weiterbildung der Erfindung ist vorgesehen, dass eines, mehrere oder alle der Wandlermodule selbst wiederum modular aufgebaut sind, indem ein solches Wandlermodul eine primärseitige Wandlerzelle, die an eine primärseitige Transformatorwindung des Transformators des Wandlermoduls angeschlossen ist, und eine sekundärseitige Wandlerzelle aufweist, die an eine sekundärseitige Transformatorwindung des Transformators des Wandlermoduls angeschlossen ist. Hierdurch kann die Modularität und dementsprechend die damit verbundenen Vorteile, wie Fehlertoleranz, Skalierbarkeit und Reparaturfähigkeit, weiter verbessert werden. Auf diese Weise kann die Modularität bis auf die Ebene der Wandlermodule fortgeführt werden. Der Spannungswandler kann somit baukastenartig aus einer Vielzahl einzelner Wandlerzellen aufgebaut werden, die identisch oder ähnlich ausgebildet sein können. Eine Wandlerzelle kann dann wahlweise als primärseitige Wandlerzelle oder sekundärseitige Wandlerzelle eingesetzt werden. Insbesondere kann eine primärseitige Wandlerzelle und eine sekundärseitige Wandlerzelle eines Wandlermoduls identisch ausgebildet sein. In einer solchen Wandlerzelle sind hinsichtlich der elektronischen Bauteile zumindest die erforderlichen Leistungshalbleiter vorhanden, die zum Erzeugen der geschalteten Energieübertragungssignale erforderlich sind. Die Leistungshalbleiter einer Wandlerzelle können z.B. als Vollbrücke (H-Brücke) oder als Halbbrücke miteinander verschaltet sein. Eine Wandlerzelle kann zudem eine eigene Steuereinrichtung oder zumindest einen Teil einer Steuereinrichtung aufweisen, um die Leistungshalbleiter zu steuern und zudem übergeordnete Steuerungsfunktionen für den Energietransfer zwischen verschiedenen Wandlermodulen oder Wandlerzellen zu steuern. Die lokale Steuereinrichtung einer Wandlerzelle kann mit einer zentralen Steuereinrichtung des Spannungswandlers in Verbindung stehen, z.B. durch Datenkommunikation, um hierdurch übergeordnete Steuerungsfunktionen und Regelungsfunktionen des Spannungswandlers zu realisieren.

Gemäß einer vorteilhaften Weiterbildung der Erfindung ist vorgesehen, dass wahlweise die primärseitige Wandlerzelle und/oder die sekundärseitige Wandlerzelle austauschbar ist. Hierdurch werden Kosten und Material gespart. Es muss im Defektfall somit nicht ein komplettes Wandlermodul ausgetauscht werden. Stattdessen ist es ausreichend, eine defekte Wandlerzelle auszutauschen. Es kann insbesondere vorgesehen sein, dass eine oder mehrere primärseitige und/oder sekundärseitige Wandlerzellen entfernbar und/oder austauschbar sind. Hierbei kann der Spannungswandler auch ohne eine oder mehrere entfernte bzw. ausgetauschte Wandlerzellen weiterbetrieben werden.

Gemäß einer vorteilhaften Weiterbildung der Erfindung ist vorgesehen, dass die Wandlermodule auf ihrer Primärseite miteinander in Reihenschaltung oder in Parallelschaltung verbunden sind, und/oder die Wandlermodule auf ihrer Sekundärseite in Reihenschaltung oder Parallelschaltung miteinander verbunden sind. Durch die Wahl einer geeigneten Verschaltung (Reihe/Parallel) kann der Spannungswandler an die jeweiligen Erfordernisse der Primärseite und der Sekundärseite angepasst werden. Soll bspw. die erste Gleichspannung erheblich größer sein als die zweite Gleichspannung, ist es vorteilhaft, die Wandlermodule primärseitig in Reihe zu schalten und sekundärseitig parallel zu schalten. Auf diese Weise wird die primärseitig anliegende Spannung eines Wandlermoduls durch die Reihenschaltung auf geringere Werte reduziert, während sekundärseitig durch die Parallelschaltung hohe Ströme verarbeitet werden können.

Gemäß einer vorteilhaften Weiterbildung der Erfindung ist vorgesehen, dass der Spannungswandler eine Steuereinrichtung aufweist, die dazu eingerichtet ist, den Transfer elektrischer Leistung von einem Wandlermodul des Spannungswandlers zu einem anderen Wandlermodul des Spannungswandlers oder mehreren anderen Wandlermodulen des Spannungswandlers gemäß einem Vorgabewert zu steuern oder zu regeln. Hierbei kann insbesondere vorgesehen sein, dass auch der Transfer elektrischer Leistung von einer Wandlerzelle des Spannungswandlers zu einer anderen Wandlerzelle individuell gesteuert oder geregelt wird. Der Vorgabewert kann dabei ein fester Vorgabewert oder ein variabler Vorgabewert sein, der je nach Betriebszustand des Spannungswandlers angepasst wird. Der Vorgabewert kann bspw. aus Kennlinien oder Kennlinienfeldern bestimmt werden. Durch die Möglichkeit, den Leistungstransfer jedes einzelnen Wandlermoduls oder sogar jeder einzelnen Wandlerzelle zu steuern oder zu regeln, kann die Belastung der einzelnen Bauteile in gewünschter Weise beeinflusst werden und die Bauteile damit vor Überlastung geschützt werden. Durch die Steuerung des Leistungsflusses kann zudem gezielt die Alterung der Bauteile einer Wandlerzelle oder eines Wandlermoduls gesteuert werden. Eine höhere Belastung führt dabei zu einer schnelleren Alterung als eine niedrigere Belastung.

Gemäß einer vorteilhaften Weiterbildung der Erfindung ist vorgesehen, dass der Transfer elektrischer Leistung zwischen Wandlermodulen oder Wandlerzellen des Spannungswandlers gemäß einem Alterungs-Vorgabewert durchgeführt wird, durch den deren Alterung durch Regelung der Belastung der einzelnen Komponenten in vorgegebener Weise beeinflusst wird.

Gemäß einer vorteilhaften Weiterbildung der Erfindung ist vorgesehen, dass die Steuereinrichtung dazu eingerichtet ist, bei einem im Betrieb des Spannungswandlers auftretenden Fehler eines Wandlermoduls dieses Wandlermodul im laufenden Betrieb des Spannungswandlers ganz oder teilweise zu deaktivieren. Auf diese Weise kann der Spannungswandler auch bei solchen partiellen Defekten weiter betrieben werden und fällt somit nicht aus. Die Reparatur kann zu einem geeigneten Zeitpunkt eingeplant werden.

Gemäß einer vorteilhaften Weiterbildung der Erfindung ist vorgesehen, dass nach Erkennung eines Fehlers des Spannungswandlers eine Rekonfiguration zumindest eines Teils des Spannungswandlers, beispielsweise einer oder mehrerer Wandlerzellen, durchgeführt wird, und der Betrieb des Spannungswandlers mit der veränderten Konfiguration fortgeführt wird. Auf diese Weise wird eine hohe Fehlertoleranz und Ausfallsicherheit des Spannungswandlers erreicht. Beispielsweise kann die Rekonfiguration derart erfolgen, dass ein Spannungswandler, der zuvor in einer Konfiguration als Dual Active Bridge betrieben wurde, durch die Rekonfiguration als Series Resonant Converter weiterbetrieben wird. Eine andere Möglichkeit der Rekonfiguration kann darin bestehen, den zunächst bidirektional wirkenden Spannungswandler in einen unidirektionalen Modus umzuschalten, oder einen Spannungswandler in Vollbrücken-Anordnung zu rekonfigurieren in eine Halbbrücken-Anordnung plus Spannungsteiler. Die Software des Spannungswandlers, d.h. ein ein erfindungsgemäßes Verfahren im Spannungswandler ausführendes Computerprogramm, steuert dabei den Leistungsfluss zwischen den Wandlerzellen in Abhängigkeit des Zustandes und der Möglichkeiten, die nach einem Fehler vorhanden sind.

Gemäß einer vorteilhaften Weiterbildung der Erfindung ist vorgesehen, dass die Steuereinrichtung dazu eingerichtet ist, ein zu deaktivierendes Wandlermodul nur auf der fehlerhaften Seite des Wandlermoduls, d.h. der Primärseite oder der Sekundärseite, zu deaktivieren und die jeweils andere Seite weiter zu betreiben. Auf diese Weise kann die Ausfallsicherheit und Verfügbarkeit des Systems weiter gesteigert werden.

Der erwähnte Transfer elektrischer Leistung, d.h. der Leistungstransfer, kann insbesondere zwischen der Primärseite und der Sekundärseite des Spannungswandlers erfolgen. Gemäß einer vorteilhaften Weiterbildung der Erfindung ist vorgesehen, dass nach Erkennung eines Fehlers eines Wandlermoduls, unabhängig von der Primärseite oder Sekundärseite, der Betrieb des Spannungswandlers fortgeführt wird.

Gemäß einer vorteilhaften Weiterbildung der Erfindung ist vorgesehen, dass die Steuereinrichtung dazu eingerichtet ist, bei ansteigendem Leistungsbedarf des Spannungswandlers und/oder im Falle einer Deaktivierung eines Wandlermoduls oder eines Teils davon ein als Reserve vorhandenes Wandlermodul oder eine Wandlerzelle zu aktivieren und in den Betrieb des Spannungswandlers zu integrieren. Hierdurch kann die Ausfallsicherheit des Systems noch weiter erhöht werden. Es können bspw. primärseitig eine oder mehrere Wandlerzellen als Reserve vorhanden sein, ebenso können sekundärseitig eine oder mehrere Wandlerzellen als Reserve vorhanden sein. Es können auch ganze Wandlermodule als Reserve vorhanden sein. Diese können solange inaktiv sein, solange kein erhöhter Leistungsbedarf und an den übrigen Wandlermodulen kein Defekt auftritt. Alternativ ist es aber auch möglich, als Reserve vorhandene Wandlermodule oder Wandlerzellen periodisch zu aktivieren und in den Betrieb des Spannungswandlers zu integrieren, auch wenn kein erhöhter Leistungsbedarf und keine Defekte vorhanden sind. In diesem Fall können periodisch andere Wandlermodule oder Wandlerzellen abgeschaltet werden und auf diese Weise geschont werden. Hierdurch ist es ferner möglich, periodisch die Funktionsfähigkeit der als Reserve vorhandenen Wandlermodule oder Wandlerzellen zu prüfen.

Die Steuereinrichtung kann einen Rechner oder mehrere Rechner, z.B. in Form von Mikrocomputern oder Mikrocontrollern, aufweisen. Die Steuereinrichtung kann eine zentrale Steuereinrichtung des Spannungswandlers umfassen. Die Steuereinrichtung kann alternativ oder in Kombination damit auch modular ausgebildet sein, indem einzelne lokale Teile der Steuereinrichtung in den Wandlermodulen oder den einzelnen Wandlerzellen vorhanden sind.

Insgesamt kann der erfindungsgemäße Spannungswandler damit derart gesteuert werden, dass eine Erweiterung von Wandlermodulen oder Wandlerzellen ohne weitere Eingriffe in die Software der Steuereinrichtung möglich ist. Ferner kann ein Ausfall eines Wandlermoduls oder einer Wandlerzelle mittels der Software durch ein anderes Wandlermodul oder eine andere Wandlerzelle kompensiert werden.

Beim erfindungsgemäßen Spannungswandler ist es somit durch die magnetische Kopplung möglich, zwischen allen Wandlermodulen oder allen Wandlerzellen elektrische Energie zu transferieren. Für die Erweiterung des Systems sind lediglich zusätzliche Wandlermodule oder Wandlerzellen erforderlich, wobei auch die Transformator-Anordnung erweitert werden kann, indem zusätzliche Transformatorwindungen auf einem gemeinsamen magnetischen Kern ergänzt werden. Auf diese Weise wird ein in der Leistung und Spannung skalierbares System geschaffen. Die Regelung des Leistungsflusses kann zentral durch eine Steuereinrichtung erfolgen.

Die eingangs genannte Aufgabe wird ferner durch ein Verfahren gemäß Anspruch 11 gelöst. Hierbei führt die Steuereinrichtung einen oder mehrere Verfahrensschritte zur Steuerung oder Regelung der Übertragung elektrischer Leistung von einem Wandlermodul des Spannungswandlers zu einem anderen Wandlermodul des Spannungswandlers oder mehreren anderen Wandlermodulen des Spannungswandlers gemäß einem Vorgabewert des Spannungswandlers aus. Auch hierdurch können die zuvor erläuterten Vorteile realisiert werden. Die Steuereinrichtung kann ferner die zuvor erläuterten weiteren Verfahrensschritte, zu denen die Steuereinrichtung eingerichtet ist, ausführen.

Auf diese Weise kann ein Spannungswandler nach dem Prinzip des Federdurchfahrens (Fault ride-through) realisiert werden, was einerseits aus der Nutzung des Mehrwindungstransformators resultiert, was eine Verbindung zwischen allen aktiven Wandlerzellen garantiert, und zusätzlich daraus, dass sowohl die Hardware als auch die Software des Spannungswandlers fehlertolerant und selbstheilend aufgebaut werden können. Die Hardware ist rekonfigurierbar, aufgrund der Entfernbarkeit eines Teils des magnetischen Kerns des Transformators inklusive der entsprechenden Windungen und der Leistungshalbleiter. Die Hardware ist selbstheilend, weil im Fehlerfall die funktionsfähigen Teile des Systems eine unterschiedliche Stromrichtertopologie realisieren. Die Software stellt sicher, dass der resultierende Spannungswandler beispielsweise mit einer Wandlerzelle weniger funktionsfähig ist oder zumindest nach der Rekonfiguration weiter funktionsfähig ist.

Die eingangs genannte Aufgabe wird außerdem gelöst durch ein Computerprogramm mit Programmcodemitteln, eingerichtet zur Durchführung des zuvor genannten Verfahrens, wenn das Computerprogramm auf einem Rechner der Steuereinrichtung ausgeführt wird. Auch hierdurch können die zuvor erläuterten Vorteile realisiert werden.

Die Erfindung wird nachfolgend anhand von Ausführungsbeispielen unter Verwendung von Zeichnungen näher erläutert.

Es zeigen
- Figur 1: eine schematische Übersichtsdarstellung eines Spannungswandlers und
- Figur 2: einen mit weiteren Details dargestellten Spannungswandler in einer ersten Ausführungsform und
- Figur 3: einen mit weiteren Details dargestellten Spannungswandler in einer zweiten Ausführungsform und
- Figur 4: eine Funktionalität des Spannungswandlers von Figur 4 im Defektfall und
- Figur 5: eine Wandlerzelle.

In den Figuren werden gleiche Bezugszeichen für einander entsprechende Elemente verwendet.

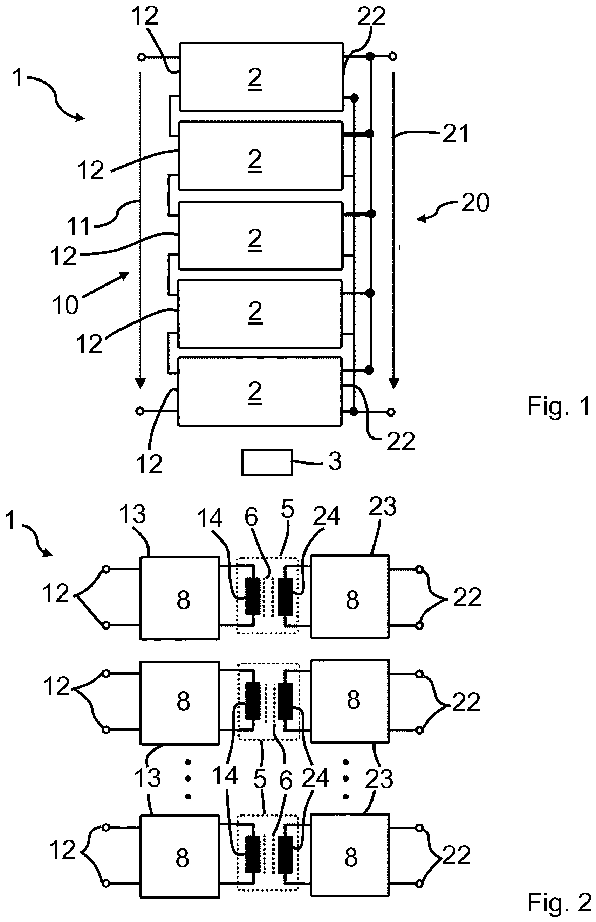

Der in Figur 1 dargestellte Spannungswandler 1 weist eine Primärseite 10 und eine Sekundärseite 20 auf. An der Primärseite 10 liegt eine erste Gleichspannung 11 an, an der Sekundärseite 20 eine zweite Gleichspannung 21. Es sei beispielhaft angenommen, dass die erste Gleichspannung 11 erheblich größer ist als die zweite Gleichspannung 21. Der Spannungswandler 1 weist ferner eine Vielzahl von Wandlermodulen 2 auf, in diesem Fall fünf Stück, die jeweils eine eigene Primärseite 12 und eine eigene Sekundärseite 22 aufweisen. Die Primärseiten 12 der Wandlermodule 2 sind der Primärseite 10 des Spannungswandlers 1 zugeordnet, ebenso sind die Sekundärseiten 22 der Wandlermodule 2 der Sekundärseite 20 des Spannungswandlers 1 zugeordnet. Die Wandlermodule 2 sind primärseitig in Reihe geschaltet und sekundärseitig parallel geschaltet. Die Wandlermodule 2 sind jeweils als Multiple Active Bridge ausgebildet, z.B. als Dual Active Bridge oder Quadruple Active Bridge, oder andere Zellen.

Der Spannungswandler 1 weist ferner eine Steuereinrichtung 3 auf, die einen Rechner und ein in einem Speicher der Steuereinrichtung 3 gespeichertes Computerprogramm (Software) aufweist. Über die Steuereinrichtung 3 wird die Funktion der einzelnen Wandlermodule 2 in gewünschter Weise gesteuert.

Die Figur 2 zeigt den Aufbau eines Spannungswandlers gemäß Figur 1 mit den einzelnen Wandlermodulen in weiterer Detaildarstellung. Erkennbar ist, dass ein Wandlermodul 2 eine primärseitige Wandlerzelle 13 und eine sekundärseitige Wandlerzelle 23 aufweist. Diese Wandlerzelle können aus Leistungselektronik 8 mit jeglicher Art von Transistoren und jeglicher Topologie aufgebaut werden. Ein "Resonant Tank" kann hinzugefügt werden, um das Schaltverhältnis zu verbessern. Die primärseitige Wandlerzelle 13 ist mit der sekundärseitigen Wandlerzelle 23 über einen Transformator 5 verbunden. Der Transformator 5 weist im vorliegenden Beispiel eine primärseitige Transformatorwicklung 14, die mit der primärseitigen Wandlerzelle 13 verbunden ist, und eine sekundärseitige Transformatorwicklung 24 auf, die mit der sekundärseitigen Wandlerzelle 23 verbunden ist. Der Transformator 5 kann einen magnetischen Kern 6, z.B. in Form eines Eisenkerns, aufweisen. Wie erkennbar ist, sind die einzelnen Wandlerzellen 2 mit jeweils eigenen Transformatoren 5 ausgebildet. Erfindungsgemäß sind die Transformatoren 5 der Wandlermodule 2 miteinander magnetisch gekoppelt, was z.B. dadurch realisiert sein kann, dass die einzelnen Transformatoren 5 eng beieinander angeordnet sind, sodass der Abstand zwischen ihren magnetischen Kernen 6 sehr gering ist und bspw. nur einen geringen Luftspalt aufweist, wie z.B. einen bei Transformatoren üblichen Luftspalt.

Die einzelnen Wandlerzellen 13, 23 können separat austauschbar ausgebildet sein, sodass sie im Defektfall oder bei einer Wartung ausgewechselt werden können.

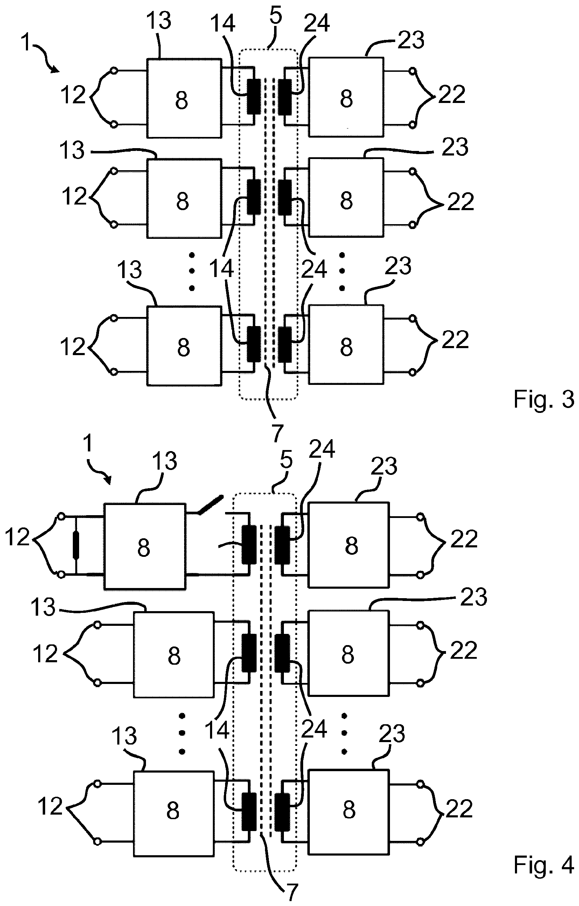

Die Figur 3 zeigt eine weitere Ausführungsform des Spannungswandlers in einer mit der Figur 2 vergleichbaren Darstellung. Im Unterschied zur Figur 2 sind hier die einzelnen Transformatoren nicht mehr als separate Transformatoren ausgebildet, sondern als eine Transformatoreinheit 5, die einen gemeinsamen magnetischen Kern 7 aufweist, auf dem die einzelnen primärseitigen Transformatorwicklungen 14 und die sekundärseitigen Transformatorwicklungen 24 angeordnet sind. Hierdurch kann die magnetische Verkopplung der einzelnen Wandlermodule 2 noch weiter verbessert werden. Zudem ist diese Lösung kostengünstiger gegenüber den einzelnen magnetischen Kernen 6 der Figur 2.

Die Figur 4 zeigt die Funktionsweise des erfindungsgemäßen Spannungswandlers 1 im Fall des Defekts einer Wandlerzelle, in diesem Fall der links oben dargestellten primärseitigen Wandlerzelle 13. Das erfindungsgemäße System weist als zentralen Vorteil eine besondere Fehlertoleranz auf. Trotz eines auftretenden Fehlers in der dargestellten Wandlerzelle 13 kann der Spannungswandler 1 weiter in Betrieb bleiben, indem die defekte Wandlerzelle 13 deaktiviert wird, z.B. indem sie überbrückt und/oder abgeschaltet wird, wie die Figur 4 zeigt. In diesem Fall übernehmen die verbliebenen Wandlerzellen 13 den Spannungsanteil der ausgefallenen Wandlerzelle 13. Die Steuereinrichtung 3 überführt die verbliebenen Wandlerzellen 13 dann in einen neuen Arbeitspunkt. Wie erkennbar ist, ist bei einem Fehler auf der Primärseite die Sekundärseite nicht betroffen, während bei einem Fehler auf der Sekundärseite die Primärseite nicht betroffen ist.

Die Figur 4 kann auch dahingehend verstanden werden, dass die in diesem Fall abgeschaltete (deaktivierte) primärseitige Wandlerzelle 13 links oben als Reservezelle vorhanden ist, die nur dann aktiviert wird, wenn ein entsprechender Bedarf besteht, z.B. bei einer Erhöhung des Leistungsbedarfs des Spannungswandlers auf der Primärseite, einer Änderung der zu wandelnden ersten Gleichspannung 11 oder bei einem Defekt oder Ausfall einer anderen primärseitigen Wandlerzelle 13. Hierbei kann in der Steuereinrichtung 3 eine entsprechende Software zur Fehlererkennung, Fehlerisolation und Betrieb des Spannungswandlers ohne Unterbrechung durch den Fehler aufweisen, was von hoher Bedeutung für die Bereitstellung eines reparablen und skalierbaren Spannungswandlers ist.

Eine Wandlerzelle kann z.B. derart deaktiviert werden, dass ihre Verbindung zum Transformator aufgetrennt wird, z.B. über einen Schalter, und ihre mit der Primärseite oder Sekundärseite verbundenen Anschlüsse überbrückt werden.

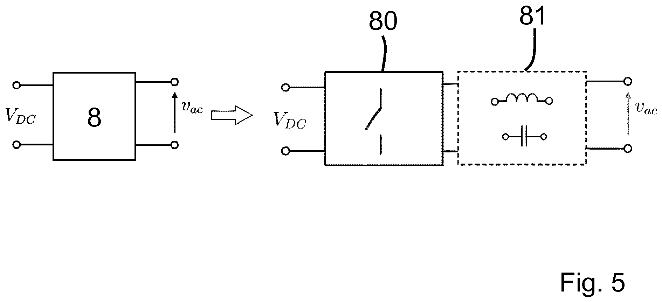

Die zuvor anhand der Figuren 2 bis 4 dargestellten Wandlerzellen 13, 23 können einen inneren Aufbau 8 aufweisen, der z.B. aus Leistungselektronik-Komponenten jeglicher Art, z.B. Transistoren, zusammengesetzt ist. Wie die Figur 5 zeigt, kann der innere Aufbau 8 auch durch eine Kombination einer Wandlerzelle 80 gemäß dem zuvor erläuterten Aufbau mit einem nachgeschalteten Resonant Tank 81 realisiert werden. Hierdurch wird das Schaltverhältnis weiter verbessert. Der Resonant Tank 81 kann eine Schaltungsanordnung aus Induktivitäten und Kondensatoren aufweisen.

## Patentansprüche

1. Spannungswandler (1) zur Wandlung einer ersten Gleichspannung (11), die an einer Primärseite (10) des Spannungswandlers (1) anliegt, in eine zweite Gleichspannung (21), die an einer Sekundärseite (20) des Spannungswandlers (1) anliegt, wobei der Spannungswandler (1) modular mit einer Vielzahl von Wandlermodulen (2) ausgebildet ist, die einerseits auf der Primärseite (10) miteinander verschaltet sind und andererseits auf der Sekundärseite (20) miteinander verschaltet sind, wobei die Wandlermodule (2) jeweils als Multiple Active Bridge, Full-resonant-Topologie, Stromquellen-Topologie oder Impedanzquellen-Topologie mit einem jeweiligen zwischen der Primärseite (12) und der Sekundärseite (22) eines Wandlermoduls (2) geschalteten Transformator (5) ausgebildet sind, wobei die Transformatoren (5) der Wandlermodule (2) miteinander magnetisch gekoppelt sind, **dadurch gekennzeichnet, dass**
- die magnetische Kopplung zwischen den Wandlermodulen (2) durch einen deren Transformatoren (5) magnetisch verbindenden magnetischen Kern (6, 7) gebildet ist, wobei der magnetische Kern (7) modular aus einzelnen Kern-Modulen aufgebaut ist, die für jedes Wandlermodul (2) jeweils separat entfernbar und/oder austauschbar sind, oder
- die einzelnen Wandlermodule (2) mit jeweils eigenen Transformatoren (5) ausgebildet sind, wobei die magnetisch miteinander gekoppelten Transformatoren (5) mechanisch lösbar miteinander gekoppelt sind, sodass ein einzelner Transformator (5) oder eine einzelne Transformatorwicklung (14, 24) austauschbar ist.

2. Spannungswandler nach dem vorhergehenden Anspruch, **dadurch gekennzeichnet, dass** der magnetische Kern (6, 7) als ringförmig geschlossener oder zumindest im Wesentlichen geschlossener magnetischer Kern ausgebildet ist.

3. Spannungswandler nach einem der Ansprüche 1 bis 2, **dadurch gekennzeichnet, dass** die Transformatoren (5) durch eine Vielzahl primärseitiger und sekundärseitiger Transformatorwicklungen (14, 24), die auf dem gemeinsamen magnetischen Kern (7) angeordnet sind, gebildet sind.

4. Spannungswandler nach einem der vorhergehenden Ansprüche, **dadurch gekennzeichnet, dass** eines, mehrere oder alle der Wandlermodule (2) selbst wiederum modular aufgebaut sind, indem ein solches Wandlermodul (2) eine primärseitige Wandlerzelle (13), die an eine primärseitige Transformatorwindung (14) des Transformators (5) des Wandlermoduls (2) angeschlossen ist, und eine sekundärseitige Wandlerzelle (23) aufweist, die an eine sekundärseitige Transformatorwindung (24) des Transformators (5) des Wandlermoduls (2) angeschlossen ist.

5. Spannungswandler nach dem vorhergehenden Anspruch, **dadurch gekennzeichnet, dass** wahlweise die primärseitige Wandlerzelle (13) und/oder die sekundärseitige Wandlerzelle (23) entfernbar und/oder austauschbar ist, so dass eine oder mehrere primärseitige und/oder sekundärseitige Wandlerzellen des Spannungswandlers entfernbar und/oder austauschbar sind.

6. Spannungswandler nach einem der vorhergehenden Ansprüche, **dadurch gekennzeichnet, dass** die Wandlermodule (2) auf ihrer Primärseite (12) miteinander in Reihenschaltung oder in Parallelschaltung verbunden sind, und/oder die Wandlermodule (2) auf ihrer Sekundärseite (22) in Reihenschaltung oder Parallelschaltung miteinander verbunden sind.

7. Spannungswandler nach einem der vorhergehenden Ansprüche, **dadurch gekennzeichnet, dass** der Spannungswandler (1) eine Steuereinrichtung (3) aufweist, die dazu eingerichtet ist, den Transfer elektrischer Leistung von einem Wandlermodul (2) des Spannungswandlers (1) zu einem anderen Wandlermodul (2) des Spannungswandlers (1) oder mehreren anderen Wandlermodulen (2) des Spannungswandlers (1) gemäß einem Vorgabewert zu steuern oder zu regeln.

8. Spannungswandler nach dem vorhergehenden Anspruch, **dadurch gekennzeichnet, dass** die Steuereinrichtung (3) dazu eingerichtet ist, bei einem im Betrieb des Spannungswandlers (1) auftretenden Fehler eines Wandlermoduls (2) dieses Wandlermodul (2) im laufenden Betrieb des Spannungswandlers (1) ganz oder teilweise zu deaktivieren.

9. Spannungswandler nach dem vorhergehenden Anspruch, **dadurch gekennzeichnet, dass** die Steuereinrichtung (3) dazu eingerichtet ist, ein zu deaktivierendes Wandlermodul (2) nur auf der fehlerhaften Seite des Wandlermoduls (2), d.h. der Primärseite (12) oder der Sekundärseite (22), zu deaktivieren und die jeweils andere Seite weiter zu betreiben.

10. Spannungswandler nach einem der Ansprüche 6 bis 8, **dadurch gekennzeichnet, dass** die Steuereinrichtung (3) dazu eingerichtet ist, bei ansteigendem Leistungsbedarf des Spannungswandlers (1) und/oder im Falle einer Deaktivierung eines Wandlermoduls (2) oder eines Teils davon ein als Reserve vorhandenes Wandlermodul (2) oder eine Wandlerzelle (13, 23) zu aktivieren und in den Betrieb des Spannungswandlers (1) zu integrieren.

11. Verfahren zum Betrieb eines Spannungswandlers (1) nach einem der vorhergehenden Ansprüche, wobei die Steuereinrichtung (3) einen oder mehrere Verfahrensschritte zur Steuerung oder Regelung der Übertragung elektrischer Leistung von einem Wandlermodul (2) des Spannungswandlers (1) zu einem anderen Wandlermodul (2) des Spannungswandlers (1) oder mehreren anderen Wandlermodulen (2) des Spannungswandlers (1) gemäß einem Vorgabewert des Spannungswandlers (1) ausführt, **dadurch gekennzeichnet, dass** ein zu deaktivierendes Wandlermodul (2) nur auf einer fehlerhaften Seite des Wandlermoduls (2), d.h. der Primärseite (12) oder der Sekundärseite (22), deaktiviert wird und die jeweils andere Seite weiter betrieben wird.

12. Verfahren nach Anspruch 11, **dadurch gekennzeichnet, dass** nach Erkennung eines Fehlers eines Wandlermoduls, unabhängig von der Primärseite oder Sekundärseite, der Betrieb des Spannungswandlers fortgeführt wird.

13. Verfahren nach Anspruch 12, **dadurch gekennzeichnet, dass** bei einem im Betrieb des Spannungswandlers (1) auftretenden Fehler eines Wandlermoduls (2) dieses Wandlermodul (2) im laufenden Betrieb des Spannungswandlers (1) ganz oder teilweise deaktiviert wird und der Spannungswandlers (1), ggf. nach einer Rekonfiguration, weiter betrieben wird.

14. Verfahren nach einem der Ansprüche 11 bis 13, **dadurch gekennzeichnet, dass** bei ansteigendem Leistungsbedarf des Spannungswandlers (1) und/oder im Falle einer Deaktivierung eines Wandlermoduls (2) oder eines Teils davon ein als Reserve vorhandenes Wandlermodul (2) oder eine Wandlerzelle (13, 23) aktiviert wird und in den Betrieb des Spannungswandlers (1) integriert wird.

15. Verfahren nach einem der Ansprüche 11 bis 14, **dadurch gekennzeichnet, dass** der Transfer elektrischer Leistung zwischen Wandlermodulen oder Wandlerzellen des Spannungswandlers gemäß einem Alterungs-Vorgabewert durchgeführt wird, durch den deren Alterung durch Regelung der Belastung der einzelnen Komponenten in vorgegebener Weise beeinflusst wird.

16. Verfahren nach einem der Ansprüche 11 bis 15, **dadurch gekennzeichnet, dass** nach Erkennung eines Fehlers des Spannungswandlers eine Rekonfiguration zumindest eines Teils des Spannungswandlers, beispielsweise einer oder mehrerer Wandlerzellen, durchgeführt wird, und der Betrieb des Spannungswandlers mit der veränderten Konfiguration fortgeführt wird.

17. Computerprogramm mit Programmcodemitteln, eingerichtet zur Durchführung des Verfahrens nach einem der Ansprüche 11 bis 16, wenn das Computerprogramm auf einem Rechner der Steuereinrichtung (3) ausgeführt wird.

## Claims

1. Voltage converter (1) for converting a first DC voltage (11), which is applied to a primary side (10) of the voltage converter (1), into a second DC voltage (21), which is applied to a secondary side (20) of the voltage converter (1), the voltage converter (1) being designed in a modular manner with a multiplicity of converter modules (2), which are connected to one another on the primary side (10) on the one hand and are connected to one another on the secondary side (20) on the other hand, the converter modules (2) each being designed as a multiple active bridge, full-resonant topology, current source topology or impedance source topology with a respective transformer (5) connected between the primary side (12) and the secondary side (22) of a converter module (2), the transformers (5) of the converter modules (2) being magnetically coupled to one another, **characterized in that** the magnetic coupling between the converter modules (2) is formed by a magnetic core (6, 7) magnetically connecting their transformers (5), the magnetic core (7) being constructed in modular fashion from individual core modules, which can each be removed and/or replaced separately for each transformer module (2), or the individual converter modules (2) are each formed with their own transformers (5), the transformers (5), which are magnetically coupled to one another, being coupled to one another in a mechanically detachable manner, so that an individual transformer (5) or an individual transformer winding (14, 24) can be replaced.

2. Voltage converter according to the preceding claim, **characterized in that** the magnetic core (6, 7) is formed as an annularly closed or at least substantially closed magnetic core.

3. Voltage converter according to any one of claims 1 to 2, **characterized in that** the transformers (5) are formed by a plurality of primary-side and secondary-side transformer windings (14, 24) arranged on the common magnetic core (7).

4. Voltage converter according to any of the preceding claims, **characterized in that** one, several or all of the converter modules (2) are themselves in turn modular **in that** such a converter module (2) comprises a primary-side converter cell (13), which is connected to a primary-side transformer winding (14) of the transformer (5) of the converter module (2), and a secondary-side converter cell (23) which is connected to a secondary-side transformer winding (24) of the transformer (5) of the converter module (2).

5. Voltage converter according to the preceding claim, **characterized in that** optionally the primary-side transformer cell (13) and/or the secondary-side transformer cell (23) is removable and/or replaceable, so that one or more primary-side and/or secondary-side transformer cells of the voltage transformer are removable and/or replaceable.

6. Voltage converter according to one of the preceding claims, **characterized in that** the converter modules (2) on their primary side (12) are connected to each other in series or in parallel, and/or the converter modules (2) on their secondary side (22) are connected to each other in series or in parallel.

7. Voltage converter according to any one of the preceding claims, **characterized in that** the voltage converter (1) comprises a control device (3) arranged to control or regulate the transfer of electrical power from one converter module (2) of the voltage converter (1) to another converter module (2) of the voltage converter (1) or several other converter modules (2) of the voltage converter (1) according to a preset value.

8. Voltage converter according to the preceding claim, **characterized in that** the control device (3) is set up, in the event of a fault occurring in a converter module (2) during operation of the voltage converter (1), to completely or partially deactivate this converter module (2) during ongoing operation of the voltage converter (1).

9. Voltage converter according to the preceding claim, **characterized in that** the control device (3) is set up to deactivate a converter module (2) to be deactivated only on the faulty side of the converter module (2), i.e. the primary side (12) or the secondary side (22), and to continue operating the respective other side.

10. Voltage converter according to one of claims 6 to 8, **characterized in that** the control device (3) is set up to activate a converter module (2) or a converter cell (13, 23) present as a reserve and to integrate it into the operation of the voltage converter (1) when the power requirement of the voltage converter (1) increases and/or in the event of deactivation of a converter module (2) or part thereof.

11. Method for operating a voltage converter (1) according to one of the preceding claims, wherein the control device (3) executes one or more method steps for controlling or regulating the transmission of electrical power from one converter module (2) of the voltage converter (1) to another converter module (2) of the voltage converter (1) or a plurality of other converter modules (2) of the voltage converter (1) according to a preset value of the voltage converter (1), **characterized in that** a converter module (2) to be deactivated is only deactivated on a faulty side of the converter module (2), i.e. the primary side (12) or the secondary side (22), and the respective other side continues to be operated.

12. Method according to claim 11, **characterized in that** after detection of a fault of a transformer module, independent of the primary or secondary side, the operation of the voltage transformer is continued.

13. Method according to claim 12, **characterized in that**, in the event of a fault occurring in a converter module (2) during operation of the voltage converter (1), this converter module (2) is completely or partially deactivated during ongoing operation of the voltage converter (1) and the voltage converter (1) continues to be operated, if necessary after reconfiguration.

14. Method according to one of the claims 11 to 13, **characterized in that** when the power requirement of the voltage converter (1) increases and/or in the event of deactivation of a converter module (2) or part thereof, a converter module (2) or a converter cell (13, 23) present as a reserve is activated and is integrated into the operation of the voltage converter (1).

15. Method according to any one of claims 11 to 14, **characterized in that** the transfer of electrical power between converter modules or converter cells of the voltage converter is carried out according to an aging default value by which their aging is influenced by regulating the load of the individual components in a predetermined manner.

16. Method according to any one of claims 11 to 15, **characterized in that**, after detection of a fault of the voltage converter, a reconfiguration of at least part of the voltage converter, for example of one or more converter cells, is carried out, and operation of the voltage converter is continued with the changed configuration.

17. Computer program with program code means, arranged for carrying out the method according to any of claims 11 to 16, when the computer program is executed on a computer of the control device (3).

## Revendications

1. Convertisseur de tension (1) pour convertir une première tension continue (11), appliquée à un côté primaire (10) du convertisseur de tension (1), en une seconde tension continue (21), appliquée à un côté secondaire (20) du convertisseur de tension (1), le convertisseur de tension (1) étant conçu de manière modulaire avec une pluralité de modules convertisseurs (2) qui sont interconnectés entre eux sur le côté primaire (10), d'une part, et qui sont interconnectés entre eux sur le côté secondaire (20), d'autre part,
dans lequel les modules convertisseurs (2) sont réalisés chacun sous la forme d'un pont actif multiple, d'une topologie de pleine résonance, d'une topologie de source de courant ou d'une topologie de source d'impédance, ayant un transformateur respectif (5) connecté entre le côté primaire (12) et le côté secondaire (22) d'un module convertisseur (2), les transformateurs (5) des modules convertisseurs (2) étant couplés magnétiquement les uns aux autres,
**caractérisé en ce que** le couplage magnétique entre les modules convertisseurs (2) est formé par un noyau magnétique (6, 7) reliant magnétiquement leurs transformateurs (5),
le noyau magnétique (7) est construit de manière modulaire à partir de modules de noyau individuels qui peuvent être enlevés et/ou remplacés respectivement séparément pour chaque module convertisseur (2), ou
les modules convertisseurs individuels (2) sont réalisés chacun avec des propres transformateurs (5), les transformateurs (5) magnétiquement couplés entre eux étant couplés entre eux de façon mécaniquement détachable, de manière à pouvoir remplacer un transformateur individuel (5) ou un enroulement de transformateur individuel (14, 24).

2. Convertisseur de tension selon la revendication précédente,
**caractérisé en ce que** le noyau magnétique (6, 7) est réalisé sous forme de noyau magnétique annulairement fermé ou au moins sensiblement fermé.

3. Convertisseur de tension selon l'une des revendications 1 à 2,
**caractérisé en ce que** les transformateurs (5) sont formés par une pluralité d'enroulements de transformateur (14, 24) côté primaire et côté secondaire, disposés sur le noyau magnétique commun (7).

4. Convertisseur de tension selon l'une des revendications précédentes,
**caractérisé en ce qu'**un, plusieurs ou tous les modules convertisseurs (2) sont eux-mêmes, à leur tour, de construction modulaire, du fait qu'un tel module convertisseur (2) comprend une cellule de convertisseur (13) côté primaire, qui est connectée à une spire de transformateur (14) côté primaire du transformateur (5) du module convertisseur (2), et une cellule de convertisseur (23) côté secondaire qui est connectée à une spire de transformateur (24) côté secondaire du transformateur (5) du module convertisseur (2).

5. Convertisseur de tension selon la revendication précédente,
**caractérisé en ce que**, optionnellement, la cellule de convertisseur (13) côté primaire et/ou la cellule de convertisseur (23) côté secondaire peut être enlevée et/ou remplacée, de sorte qu'une ou plusieurs cellules de convertisseur côté primaire et/ou côté secondaire du convertisseur de tension peuvent être enlevées et/ou remplacées.

6. Convertisseur de tension selon l'une des revendications précédentes,
**caractérisé en ce que** les modules convertisseurs (2) sont reliés entre eux en série ou en parallèle sur leur côté primaire (12), et/ou les modules convertisseurs (2) sont reliés entre eux en série ou en parallèle sur leur côté secondaire (22).

7. Convertisseur de tension selon l'une des revendications précédentes,
**caractérisé en ce que** le convertisseur de tension (1) comprend un dispositif de commande (3) qui est conçu pour commander ou réguler le transfert de puissance électrique d'un module convertisseur (2) du convertisseur de tension (1) à un autre module convertisseur (2) du convertisseur de tension (1) ou à plusieurs autres modules convertisseurs (2) du convertisseur de tension (1), selon une valeur prédéfinie.

8. Convertisseur de tension selon la revendication précédente,
**caractérisé en ce que** le dispositif de commande (3) est conçu de telle sorte que, dans le cas d'un défaut d'un module convertisseur (2), survenant pendant le fonctionnement du convertisseur de tension (1), ledit module convertisseur (2) est complètement ou partiellement désactivé pendant le fonctionnement en cours du convertisseur de tension (1).

9. Convertisseur de tension selon la revendication précédente,
**caractérisé en ce que** le dispositif de commande (3) est conçu pour désactiver un module convertisseur (2) à désactiver uniquement sur le côté défectueux du module convertisseur (2), c'est-à-dire sur le côté primaire (12) ou sur le côté secondaire (22), et pour continuer à faire fonctionner l'autre côté respectif.

10. Convertisseur de tension selon l'une des revendications 6 à 8,
**caractérisé en ce que** le dispositif de commande (3) est conçu pour activer un module convertisseur (2), présent en tant que réserve, ou une cellule de convertisseur (13, 23), en cas de besoin en puissance croissant du convertisseur de tension (1) et/ou en cas de désactivation d'un module convertisseur (2) ou d'une partie de celui-ci, et pour l'intégrer au fonctionnement du convertisseur de tension (1).

11. Procédé de fonctionnement d'un convertisseur de tension (1) selon l'une des revendications précédentes,
dans lequel le dispositif de commande (3) exécute une ou plusieurs étapes de procédé pour commander ou réguler la transmission de puissance électrique d'un module convertisseur (2) du convertisseur de tension (1) à un autre module convertisseur (2) du convertisseur de tension (1) ou à plusieurs autres modules convertisseurs (2) du convertisseur de tension (1), selon une valeur prédéfinie du convertisseur de tension (1),
**caractérisé en ce qu'**un module convertisseur (2) à désactiver est désactivé uniquement sur un côté défectueux du module convertisseur (2), c'est-à-dire sur le côté primaire (12) ou sur le côté secondaire (22), et on continue à faire fonctionner l'autre côté respectif.

12. Procédé selon la revendication 11,
**caractérisé en ce qu'**après détection d'un défaut d'un module convertisseur, que ce soit sur le côté primaire ou sur le côté secondaire, on continue à faire fonctionner le convertisseur de tension.

13. Procédé selon la revendication 12,
**caractérisé en ce que**, en cas de défaut d'un module convertisseur (2), survenant pendant le fonctionnement du convertisseur de tension (1), ledit module convertisseur (2) est complètement ou partiellement désactivé pendant le fonctionnement en cours du convertisseur de tension (1), et on continue à faire fonctionner le convertisseur de tension (1), le cas échéant après reconfiguration.

14. Procédé selon l'une des revendications 11 à 13,
**caractérisé en ce qu'**en cas de besoin en puissance croissant du convertisseur de tension (1) et/ou en cas de désactivation d'un module convertisseur (2) ou d'une partie de celui-ci, un module convertisseur (2), présent en tant que réserve, ou une cellule de convertisseur (13, 23) est activé(e) et intégré(e) au fonctionnement du convertisseur de tension (1).

15. Procédé selon l'une des revendications 11 à 14,
**caractérisé en ce que** le transfert de puissance électrique entre les modules convertisseurs ou les cellules de convertisseur du convertisseur de tension est effectué selon une valeur prédéfinie de vieillissement par laquelle leur vieillissement est influencé de manière prédéterminée par la régulation de la charge sur les composants individuels.

16. Procédé selon l'une des revendications 11 à 15,
**caractérisé en ce que**, après détection d'un défaut du convertisseur de tension, on effectue une reconfiguration d'au moins une partie du convertisseur de tension, par exemple d'une ou de plusieurs cellules de convertisseur, et on continue à faire fonctionner le convertisseur de tension avec la configuration modifiée.

17. Programme informatique ayant des moyens de code de programme, conçu pour mettre en oeuvre le procédé selon l'une des revendications 11 à 16, lorsque le programme informatique est exécuté sur un ordinateur du dispositif de commande (3).
